# EUROPEAN PATENT APPLICATION

(11) **EP 1 267 288 A1**
(43) Date of publication of application: **18.12.2002**
(21) Application number: 01119350.5
(22) Date of filing: 10.08.2001
(51) Int. Cl.: G06F 17/60

(54) **Online creation and management of enterprises**

(30) Priority: 11.06.2001 EP 01114130
(71) Applicant: Donatien, Roger, F-76000 Rouen (FR)
(72) Inventor: Donatien, Roger, F-76000 Rouen (FR)
(74) Representative: Rupp, Christian, Dipl.Phys.

(57) **Abstract**

The underlying invention generally relates to the field of electronic business and commerce via the Internet, especially to websites using graphical interfaces (200) to provide a method for an online creation and management of enterprises by means of applications running on a server (102) in a data network environment (104).
Thereby, the server (102) can be accessed from clients (106,108) over the data network (104). Application programs can be started by means of a graphical interface (200) offered to the clients. The process data of the application programs can be accessed by the clients (106,108) or stored on distributed resources (110) of the data network (104). Moreover, the applications generate data relevant for creating and/or managing enterprises.

## Description

### FIELD AND BACKGROUND OF THE INVENTION

The underlying invention is directed to the field of electronic business and commerce via the Internet, especially to HTML websites using graphical interfaces to provide an online creation and management of enterprises. It can eually be applied to non-profit organizations such as f.e. a French "Associations loi 1901".

The number of people and companies having access to the Internet is growing rapidly today. Companies are increasingly interested in reaching potential new customers, selling and marketing their products and services over the Internet, especially via the World Wide Web (WWW). Therefore, many efforts have recently been undertaken to carry out business electronically. With increasing numbers of goods and services offered for sale on the Internet, commerce in this new marketplace is booming. As consumers become more comfortable with the security issues of using credit cards to make purchases on the Internet, more and more of them are enjoying the ease and convenience of shopping at their computers.

### BRIEF DESCRIPTION OF THE PRESENT STATE OF THE ART

Applications providing electronic business solutions which use the World Wide Web (WWW) as a platform are based on the TCP/IP protocol. According to the state of the art, there are different solutions to the field of electronic business and commerce ("E-Commerce") transactions available, each of them being optimized to a specific application environment. Thus, each of these solutions inherently contains certain restrictions.

A class of programs that facilitates and manages transaction-oriented applications is Online Transaction Processing (OLTP). Typically, OLTP is applied to data entry and retrieval transactions in a number of enterprises, including banking, airlines, supermarkets, and manufacturers. Probably the most widely installed OLTP product is IBM's Customer Information Control System (CICS). Today's OLTP increasingly requires support for transactions that span a network and may include more than one company. For this reason, new OLTP software uses client/server processing and brokering software that allows transactions to run on different computer platforms in a network.

In contrast to this, Online Analytical Processing (OLAP) denotes a class of programs which enables a user to easily and selectively extract and view data from different points of view. For example, a user can request that data are analyzed to display a spreadsheet showing all of a company's products sold in a specific country within a specific time period in comparison with other product sales in the same country within the same time period. To facilitate this kind of analysis, OLAP data is stored in a multidimensional database. Whereas a relational database can be thought of as two-dimensional, a multidimensional database considers each data attribute (such as product, geographic sales region, and time period) as a separate "dimension". OLAP software can locate the intersection of dimensions (e.g. all products sold in a certain region above a certain price during a certain time period) and display them. Attributes such as time periods can be broken down into sub-attributes.

OLAP can be used for data mining or the discovery of previously unrecognized relationships between data items. An OLAP database does not need to be as large as a data warehouse, since not all transactional data is needed for trend analysis. Using Open Database Connectivity (ODBC), data can be imported from existing relational databases to create a multidimensional database for OLAP. Two leading OLAP products are Arbor Software's Essbase and Oracle's Express Server. OLAP products are typically designed for multiple-user environments, with the cost of the software based on the number of users.

In the following, several examples for recent efforts in the field of electronic business and commerce being closely related to the underlying invention shall representatively be cited:

The US patent 5,793,966 discloses a client/server system and a process implemented in said client/server system for the authorization, creation and maintenance of online services. Thereby, requests for authorizing operations to be performed on the server machine such as storing, creating or modifying information are translated on a client machine into at least one message which is sent to the server machine. The server machine receives said message and authorizes specific online services. This information on the server machine is then made accessible by the server machine to other client machines. The communication of the clients with the server is performed with the aid of the HTTP protocol using a TCP/IP connection.

WO 01/01269 discloses a "virtual campus" including interactive work plans and administrative resources presented online with the aid of a World Wide Web (WWW) interface. By means of the virtual campus a student can communicate with other students, create and update an individual work plan, access required resources, store own files and be apprised of virtual announcements.

WO 00/52552 a technique for providing electronic commerce ("E-Commerce") transactions via the World Wide Web (WWW) for the products of a marketing company is disclosed. The invention includes facilities for signing up new customers and recruiting, training and supporting new business owners by means of an interactive online process. Optionally, a combination of a specific marketing business with a membership buying opportunity using both electronic commerce and face-to-face transactions can be provided.

Finally WO 00/65443 discloses a virtual company network tool kit comprising a computer program product for creating, maintaining and destroying virtual environments. Software objects performing predetermined functions are created and stored in a repository. To create and customize a call processing system, the desired objects are selected and assigned to user-defined parameters.

Since several embodiments of the underlying invention are closely related to Internet-based financial analysis tools, in the following a brief overview shall be given concerning conventional French tax forms which are available over the Internet and can be filled in online.

The French government provides French tax forms to allow French companies to file tax returns online. These tax forms are primarily input forms comprising a balance sheet, a profit-and-loss statement and additional input forms detailing the balance sheet and the profit-and-loss statement.

Accountants usually prepare the tax forms by transferring a balance of accounts into a tax form program. The tax form program uses a look-up table to match the standard chart of accounts of the general ledger with the destination fields in the tax forms.

Since a further embodiment of the underlying invention refers to an online creation and management of databases, in the following a brief overview shall be given concerning conventional Database Management Systems (DBMS) which can be accessed and used online.

Online Database Management Systems (ODBMS) control the organization, storage, retrieval, security and integrity of data in a database, accept requests from the application and instruct the operating system to transfer the appropriate data. New categories of data can be added to the database without disruption to the existing system. Adding a field to a record does not require changing any of the programs that do not use the data in that new field. ODBMS provide query languages and report writers that let users interactively interrogate the database and analyze its data. This important feature gives users access to all management information as needed.

Two of these DBMS are phpMyAdmin and Lotus Notes/Domino. phpMyAdmin is an Internet-based program which enables a software developer to administer a MySQL database online, in which database tables and fields are defined. Furthermore, phpMyAdmin allows software programmers to execute queries which are based on the database language SQL ("Structured Query Language"). Its main features are:
- creating and dropping databases,
- creating, dropping, altering, browsing and copying tables,
- inserting, deleting and editing fields,
- executing any SQL statement, even batch-queries,
- managing keys on fields,
- loading text files into tables,
- creating and reading dumps of tables,
- exporting and importing data,
- administering multiple servers and single databases, and
- communicating in more than 20 different languages.

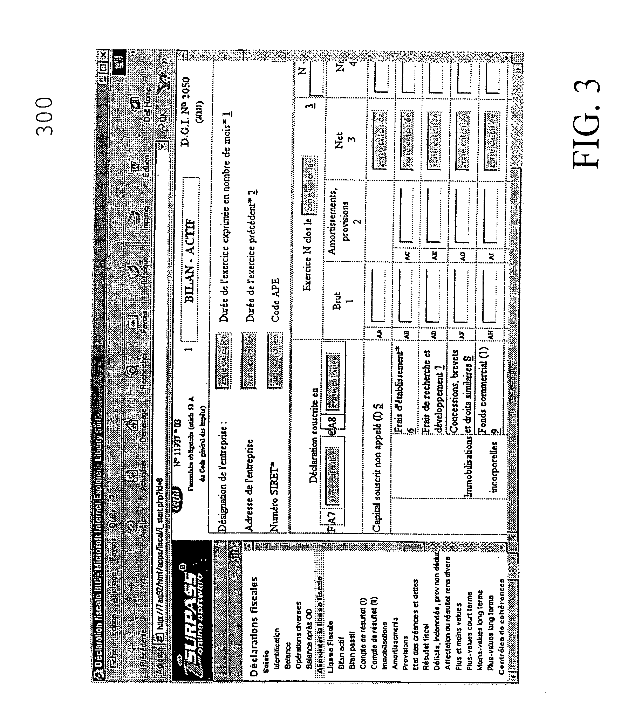

ODBMS can particularly be applied to manage and process financial data. For this purpose a plurality of applications is available on the Internet. For example, Fig. 3 exhibits a window showing a conventional French tax form according to the state of the art. When the users chooses "Alimenter la liasse fiscale" (literal translation: "feed tax form") from the scrollable list on the left, the balance is dispatched into a balance sheet, an income statement form and the remaining tax forms by means of a look-up table that matches general ledger accounts (the so-called "Plan Comptable") with French tax codes.

### DEFICIENCIES AND DISADVANTAGES OF THE KNOWN SOLUTIONS OF THE PRESENT STATE OF THE ART

All examples cited above focus on single aspects of electronic business, but do not allow to integrate all functions which are necessary to create and manage an enterprise by means of an integrated platform.

For example, the above-described DBMS phpMyAdmin is not meant to be used by end-users as it only allows to define the database structure on the side of the server and not on the side of the client. Moreover, phpMyAdmin does not enable software programmers to define field attributes for input forms and output statements such as field format and input range.

Lotus Notes/Domino allows software programmers to define tables and input fields only within the Lotus Notes/Domino environment and not within a relational database or within the context of an online company (e.g. as managed by the "iSurpass" website).

### OBJECT OF THE UNDERLYING INVENTION

In view of the explanations mentioned above, it is the object of the underlying invention to propose a new technique for virtually creating and managing enterprises by means of a World Wide Web (WWW) interface, which allows to facilitate the process of an online creation and management of enterprises by providing functions necessary for creating and managing enterprises using an integrated platform.

This object is achieved by means of the features of the independent claims. Advantageous features are defined in the dependent claims.

### SUMMARY OF THE INVENTION

The underlying invention proposes a low-cost solution for the object of an online creation and management of enterprises as defined above that can easily be realized. In order to achieve this object, a corresponding application runs on a server within a data network environment (especially the Internet) for potential users which want to virtually and online create and/or manage an enterprise. Thereby, the invention is specially optimized for HTML websites using a TCP/IP connection which can be accessed via the World Wide Web (WWW). The invention can particularly be applied in the field of small and medium-sized enterprises as well as for self-employed persons.

### BRIEF DESCRIPTION OF THE CLAIMS

In general, those skilled in the art will readily recognize that the realization of the underlying invention is not restricted to the above-described examples. Many modifications and variations may be made to the embodiments of the underlying invention disclosed herein without substantially departing from the scope of the invention as defined in the following claims.

The independent claim 1 and the dependent claims 2 to 6 refer to a method for an online creation and management of enterprises by means of applications running on a server in a data network environment according to the preferred embodiment of the underlying invention. Thereby, the server can be accessed from clients over the data network. Application programs can be started by means of a graphical interface offered to the client. The process data of the application programs can be entered by the client or stored on distributed resources of the data network. Moreover, the applications generate data relevant for creating and/or managing an enterprise. The graphical interface can offer pull-down menus displaying the path of the site tree the client has followed. When entering date information, the current month and year can automatically be added once the client has entered a day and activated a predetermined key on a keyboard. Furthermore, when entering date information, the current year can be automatically added once the client has entered a day and month and activated by means of a predetermined key on a keyboard. A business plan can be automatically generated by means of a question and answer process. Additionally, financial planning and asset management applications can be provided.

Besides, the dependent claim 7 pertains to a software program code for implementing a method according to anyone of the preceding claims, which runs on a computing device in a data network environment.

In the independent claim 8 a system for an online creation and management of enterprises is proposed according to another embodiment of the underlying invention. The system comprises a server with applications in a data network environment, and the server can be accessed from clients over the data network. The applications can be started by means of a graphical interface offered to the client. The applications process data entered by the client or data stored on distributed resources of the data network. The applications generate data relevant for creating and/or managing an enterprise.

The independent claim 9 and the dependent claims 10 to 12 refer to a method for processing financial input data online by means of applications running on a server in a data network environment, wherein the server can be accessed from clients and over the data network, the applications can be started by means of a graphical interface offered to the clients, and the applications process data entered by the clients or data stored on distributed resources. The online transfer of data files comprising financial input data to predefined tax forms which can be accessed via the Internet is provided by means of an hyperlink to an HTML-based Internet program serving as a financial analysis tool for processing said financial input data.

Next, the dependent claim 13 pertains to a software program code implementing a method according to anyone of the claims 9 to 12 when run on a computing device in a data network environment.

The independent claim 14 and the dependent claims 15 to 17 refer to a financial analysis and expert system for processing financial input data online by means of applications running on a server in a data network environment, wherein a method for an online processing of financial input data is employed using a financial analysis tool according to anyone of the claims 9 to 12.

The independent claim 18 and the dependent claims 19 to 21 are directed to a method for creating and managing databases online by means of applications running on a server in a data network environment, wherein the server can be accessed from clients and over the data network, the applications can be started by means of a graphical interface offered to the clients, the applications process data entered by the clients and or data stored on distributed resources, and the applications generate data relevant for creating and/or managing a database.

Moreover, the dependent claim 22 refers to a software program code implementing a method according to anyone of the claims 18 to 21 when run on a computing device in a data network environment.

Finally, the independent claim 23 pertains to a system for creating and managing databases online, wherein the system comprises a server with applications in a data network environment which can be accessed from clients over the data network, the applications can be started by means of a graphical interface offered to the clients, the applications process data entered by the clients or data stored on distributed resources, and the applications generate data relevant for creating and/or managing a database.

### BRIEF DESCRIPTION OF THE DRAWINGS

Further aspects, features, advantages and useful applications of the underlying invention result from the subordinate claims as well as from the following description of two preferred embodiments of the invention which are depicted in the following drawings.
- FIG. 1a: shows a system architecture 100a of the data network environment 104 in accordance with the preferred embodiment of the underlying invention, which is directed to the online creation and management of enterprises,
- FIG. 1b: shows a system architecture 100b of the data network environment 104 in accordance with another embodiment of the underlying invention, which is directed to the online management of financial data,
- FIG. 1c: shows a system architecture 100c of the data network environment 104 in accordance with another embodiment of the underlying invention, which is directed to the online creation and management of databases,
- FIG. 2: shows a simplified example of the graphical interface 200 proposed to the clients 106 and 108 accessing the server 102 in accordance with the preferred embodiment of the underlying invention,
- FIG. 3: exhibits a window 300 representing a conventional French tax form which can be accessed over the Internet 104 according to the present state of the art,
- FIG. 4: exhibits a window 400 showing an input form used for the financial analysis and expert system providing an online processing of financial input data according to an embodiment of the underlying invention,
- FIG. 5: exhibits a window 500 showing a sample report of the financial analysis and expert system providing an online processing of financial input data according to an embodiment of the underlying invention,
- FIG. 6: exhibits a window 600 showing an example of a website comprising an input form for the financial analysis and expert system providing an online processing of financial input data according to an embodiment of the underlying invention, and

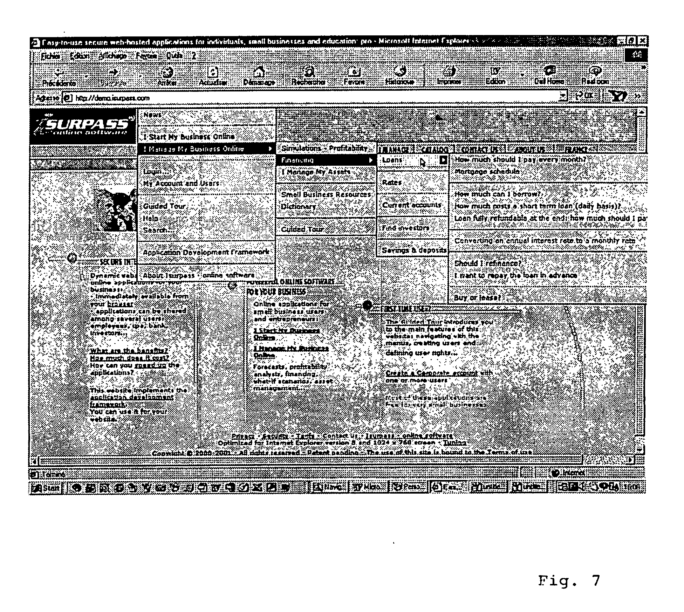

- Fig. 7: shows an example to illustrate the navigation in the web-site accordingto the present invention.

### DETAILED DESCRIPTION OF THE UNDERLYING INVENTION

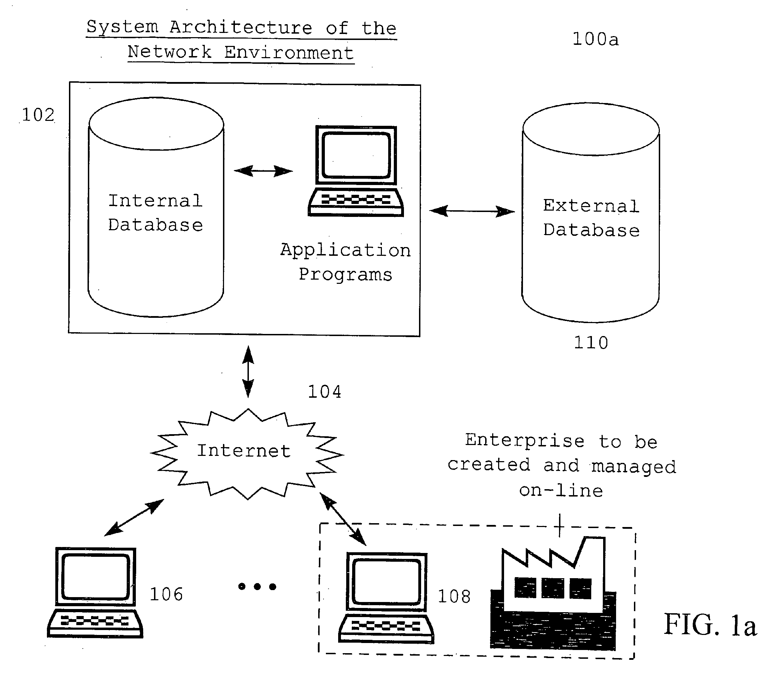

In the following the functions of the structures comprised in the preferred embodiment of the underlying invention as depicted in Figs. 1a to 6 are explained.

It can be seen from Fig. 1a that, according to the preferred embodiment of the underlying invention, a server 102 is provided which can be accessed by means of a data network (Internet) 104 from a plurality of clients 106 and 108. The server 102, on the other hand, can directly access external data sources 110 or by means of the data network 104.

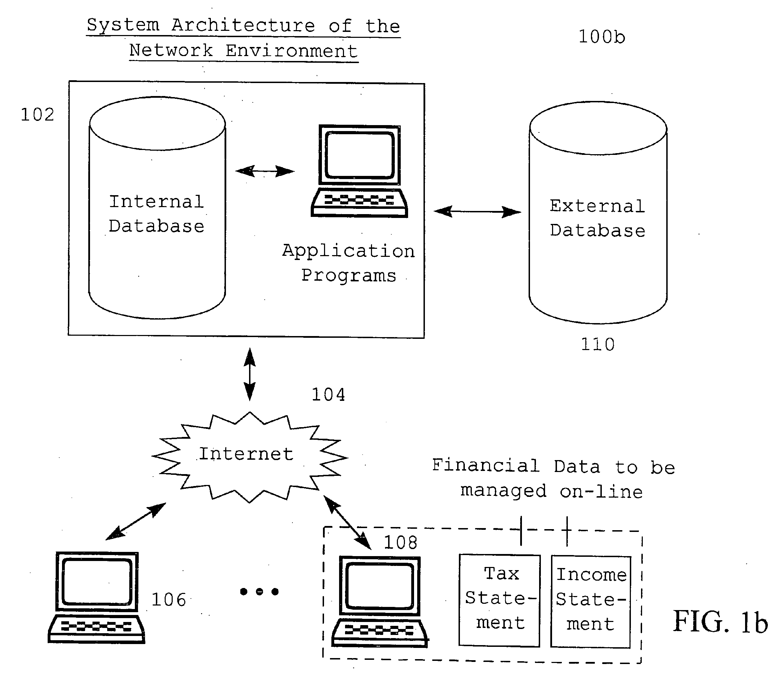

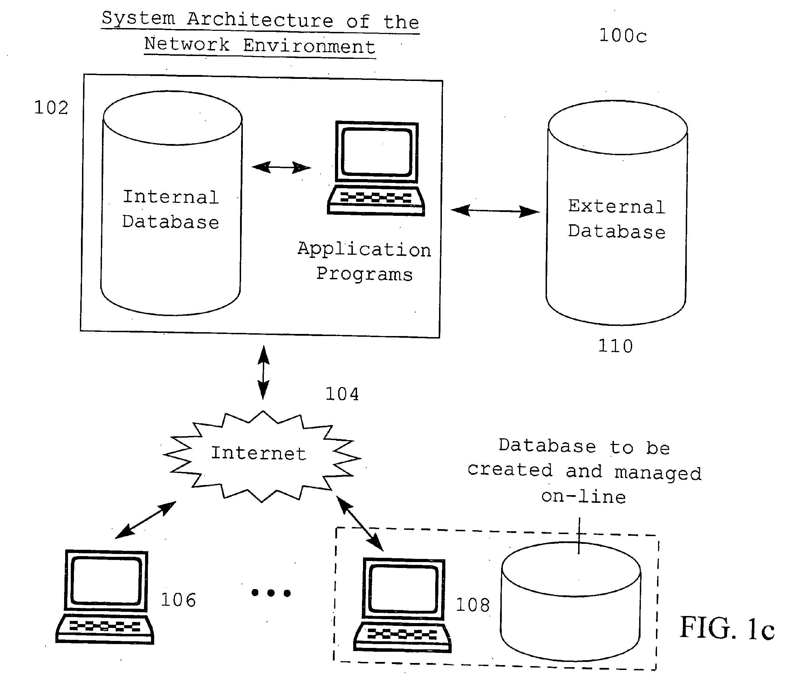

Other embodiments of the underlying invention are directed to the online management of financial data and databases as depicted in Figs 1b and 1c, respectively. They shall be explained later on.

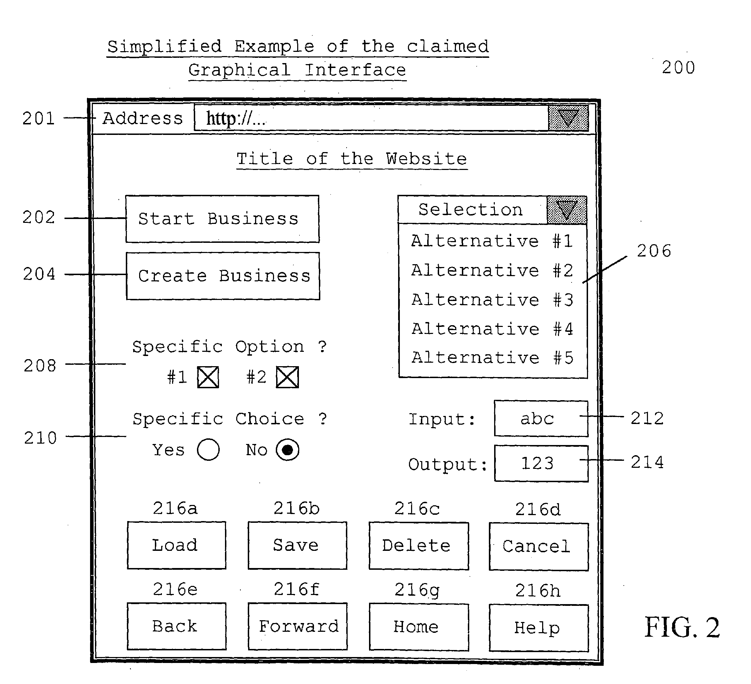

Fig. 2 shows a graphical interface 200 offered to the user of a client 106 and/or 108 referring to the preferred embodiment of the underlying invention as depicted in Fig. 1a. The main modules are the "Start Business" module 202 and the "Create Business" module 204. Each of the accessible entries can be accessed by means of pull-down menus 206.

This online application according to the underlying invention is a software program which is bound to be used directly from a browser of a client. Data used or generated by means of this online application can be stored for example on a dedicated UNIX server in a Web environment. To ensure the security of the data, a highly secured server comprising a UNIX operating system, redundant hard discs, firewall protection systems, etc. are used to run the online application.

The application presents pull-down menus to the user. Said pull-down menus can be compared to a site map such that the user is always aware where he/she is. The path the user has followed and the site tree appears in black on the pull-down menu such that the user can directly navigate to pages he has already visited before. In comparison to clicking backwards until the wanted page is accessed again, this technique enables a quick and elegant navigation.

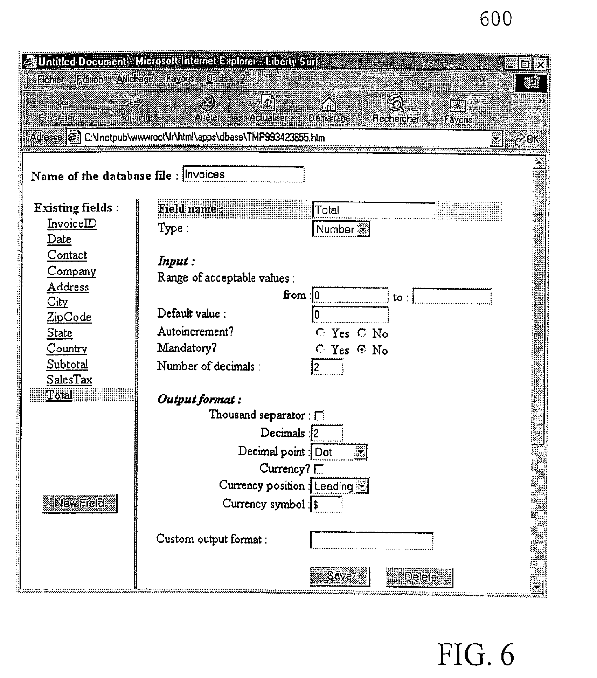

Figur 6 shows a menu enabling a navigation in the website from any page directly to another page. This essentially is a menu-driven site map. Each sub-menu shows all the branches stemming from a branch of the site tree. The starting point usually is the logo appearing on the top left side, but potentially one can start from any point on the screen, such as bottom left, or a "site-tree icon" in a menu bar for instance. Moving the cursor onto each of the branches shows the sub-branches if any.

The path the user has followed appears in black, the currently selected branch (mouse pointer over the branch) appears f.e. in green and displays the subbranches as shown in figure 6.

Data of the users are associated to a corporate account as well as one or more user accounts (sub-accounts), such as for example manager, employees, CPI, bank, shareholder, etc. To create a corporate account, a "login" button has to be activated. When a corporate account is created, the first user is registered as an administrator and gets all the functions of an administrator. The administrator can do any action such as updating or editing as well as creating new users. Furthermore, he/she can create new administrators, who will equally benefit from such privileges.

Once a user is logged in, the name of the main account and the user name appear as defaults in a status bar.

By default the first user (administrator) bears the same name as the corporate account. This default can of course be changed later on (e.g. to "admin"). The administrator is the only user of a certain account who can create users and grant them rights. For this purpose the administrator has to be logged in as "administrator". Once a user is logged in as "administrator", new user accounts can be added and the rights of these added users can be defined.

Additionally, the system comprises means for accelerating the data entry: For example, to input data, the month and year can be automatically added by the application once the day and the enter key are entered. As soon as the current day and the current month are input, the year is automatically inserted. In order to speed up data entry, the application provides keyboard short cuts. The data entry is further accelerated by the function of moving the cursor from one data entry field to another data entry field by activating the enter key of the keyboard.

Furtheron, the data entry is accelerated in the case of currency conversion, such that by activating a predefined keyboard key a currency conversion in a first direction is effected, whereas upon activation of another predefined key the inverse conversion is automatically calculated and the result thereof is displayed in the box in which the user has entered an initial amount.

By hitting the RETURN key the active data entry can automatically pass from a first entry box to another one.

The application according to the underlying invention has two major aspects: the online creation of a business as well as the online management of a business. To start or create a business online, a series of online applications aimed at (virtually) starting a business is proposed, such as legal forms and an-automatically edited business plan. The business plan may additionally contain an valuation program. Thereby, calculations are preferably carried out by means of two-way spreadsheets.

All tables are presented in the form of a HTML file.

All data are retrieved from a database in one step. The calculations are then carried out locally on the navigation level. Finally the resulting data are stored on the server database in a single step. The retrieval (read-out) and the storage of the data is carried out serially: The entered and/or processed data and the corresponding HTML field types are concatenated in one string while registering them. When reading and filling the data form fields of the HTML calculation file the string is the deconcatenated (parsed).

The serialisation/concatenation of a single character string associating values and the "address" of each HTML form field presents the following advantages:
■ As the calulation process is carried out on the navigation/client level, it is not necessary to forward the formular to each table and to await the server's reponse,
■ The storage in the database is independent from the HTML form fields, the HTML form therefore can be update without the necessity to update the database correspondingly,
■ The storage process in the database in simple: A registration of data requires only the login and the serialisation string, and not hundreds of different data fields.

It is possible to control the way numbers and dates are supposed to be displayed and printed. This feature affects all data fields on the website. All the data checking controlling user input uses these paramters set by a user in a centralized manner.

When loading a HTML form, the data entry fields are automatically formatted as text, numbers or date by a generic function:
data capture (seizure) control + centering left or
right + color of the data capture zone.

In case of a data seizure error, the zone is diplayed in red. As soon as the error is corrected, the zone is displayed in green or blue as soon as the cursor is active in the corresponding zone (or in gray in case the cursor left the zone).

Colored "Warning Zones" indicate the result of certain requests or transactions with the server:
■ Yellow: Information to be taken into account
■ Red: Impossible to handle the request
■ Green/Blue: OK.

Furthermore, online legal forms are provided allowing the creation of all documents required to incorporate a business legally. Shares can be computed automatically. The business plan module is designed to be easy to use. This module contains an valuation program in case the user decides to purchase another small company (store, restaurant, service company, etc.). The form sheet of the online business plan module can be filled out in a question and answer type. When starting the business plan module, it has at first to be decided whether the user wants to start a new company, purchase an existing one or perform "what-if" scenarios (simulations) for an existing company. What-if scenarios can also be applied to an existing business. If an existing business is planned to be bought, an valuation of this business can be performed based on the company profile. A financing sub-module computes financing needs. Loan payments are computed automatically and the budget is updated accordingly. The result of carrying out the procedure according to the business plan module is a report which can, for example, be submitted to a bank to get a loan. The budget and balance sheets are computed automatically. Thereby, the report may also include charts (business graphics) and a financing plan.

In the following, the features of the business online management module will be explained.

The business management online module comprises a series of online applications for (virtually) running a business. These are among others the following sub-modules:
- financing: entrance, re-financing, placements,
- what-if scenarios, profitability of investments: break even point, profitability of a marketing campaign, and
- managing of assets which can be located at several places and/or at several departments in the company.

The fixed assets can be managed from an accounting standpoint: Allowances for depreciation, financial projections, etc.

The business online management module furthermore comprises the following sub-modules:
- financing: salaries, etc.,
- re-financing a loan,
- re-financing an exisitn loan,
- shareholders current accounts,
- managing of assets (PCs, software, etc.),
- inventory,
- export to spreadsheet programs,
- input forms,
- comparison between car expensess at real costs and "flat rate per mile", and
- exemplary output statements.

The financing sub-modules consist of a large set of calculation tools such as for example calculation of the re-financing of a loan. The user can perform simulations and find out what the real benefit is.

Other financing tools are:
- monthly or quarterly payments, etc.
- daily interests,
- how much the user can borrow based on how much he can pay every month,
- "infine" mortgages,
- converting an annual rate to a monthly rate, daily rate or vice versa,
- refunding a loan in advance,
- buying or renting, and
- shareholders current accounts.

Thereby, shareholders can put money on their current account for the company, and current account holders are entitled to receive interests.

Assets such as computers, software licences, furniture, machines can be managed. All the assets can be managed across several location of the company. Furthermore, forecast fixed assets and depreciations for several years can be managed. The following are examples of the asset management possibilities:
- inventory per location and/or department in the company,
- sort assets by category,
- computation of fixed assets and depreciations from an accounting standpoint: deprecations (straight-line, double-declining, some-of-years-digits, etc.),
- accounting entries, capital gains, and
- five-year financial projections.

It is a particular advantage of the present invention that a plurality of users does not only share files on a common server, but applications running on a server, which allows to virtually and online create and/or manage a business.

In the following, a set of further useful embodiments of the underlying invention shall be described in detail.

### 1.Online transfer of a balance of accounts to French tax forms and generation of financial reports

According to an embodiment of the underlying invention, an hyperlink to an HTML-based French Internet program serving as a financial analysis tool is disclosed. Fig. 1b shows the employed system architecture 100b of the data network environment. Thereby, an input document comprising a balance of accounts or a general ledger can be transferred to said HTML-based Internet program online. This program generates a financial report for at least one French tax form given by at least one HTML page which can be accessed over the Internet.

An HTML page published on the Internet displays several frames:
- One frame allows the user to upload a balance of accounts.
- Another frame displays the official French tax form (offered by the French government).
- The user can print a report that contains a kind of financial analysis based on the tax form tables (called "Comptes annuels").

Once the user has uploaded the balance (or inputted the balance or the general ledger, respectively), he can click a button or hyperlink to feed the tax form.

The balance can be uploaded in an EDI format, ASCII file format or Excel format, such as:

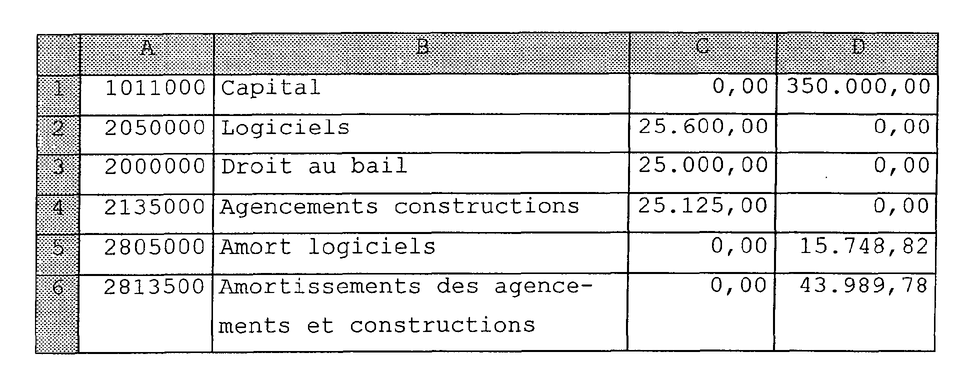

Moreover, the user can choose a plurality of other functions. They can be summarized as follows:
- The user can view or edit the look-up table that matches the French Plan Comptable (= the chart of accounts) with the tax codes of the input fields.
- Once the tax form has been fed, the user can view a series of control windows, wherein the consistency between all the tables of the tax form is checked. If a problem occurs, the user can click the hyperlinks of the tax codes to be directly forwarded to the table where the problem occurs.
- The user can print a report that contains a kind of financial analysis based on the tax form tables.

### 2.Financial analysis and expert system enabling an "intelligent" generation of financial reports

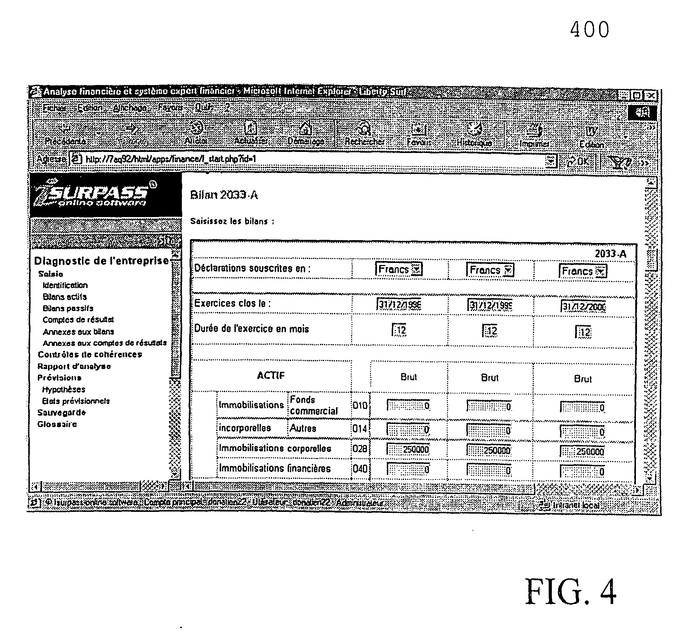

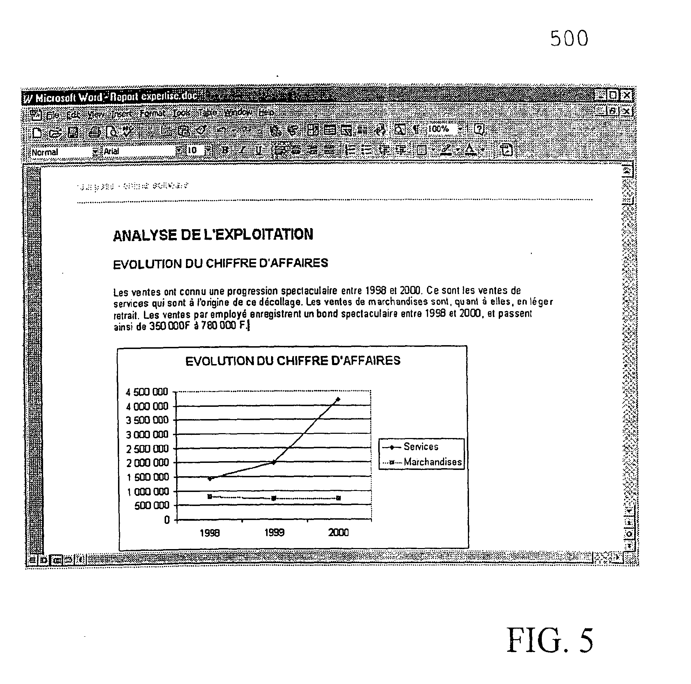

According to a further embodiment of the underlying invention, an online financial analysis and expert system is disclosed for the online generation of an intelligent report as defined above. The system provides input forms 400 as depicted in Fig. 4 and sample reports 500 as given by Fig. 5.

The purpose of a financial analysis program is to calculate ratios from balance sheets and from profit-and-loss statements. Some programs (that are not based on the Internet, however) can also generate a so-called "intelligent" report which consists of human-readable sentences generated by trends and ratios derived from a financial analysis. Said report usually contains sentences, ratios and business graphics.

Instead of inputting balance sheets and income statements, the user can optionally import balances. In this case, these balances are inserted in the balance and income statement forms. A sample report 500 can either be created in an HTML format or in a Microsoft Word format.

### 3.Online creation and management of databases

According to another embodiment of the underlying invention, a method for an online creation and management of a database is disclosed. The employed system architecture 100c of the data network environment can be taken from Fig. 1c.

The purpose of an online database management program is to allow an end-user with minimal computer experience to define a database online, and to define input fields, input forms and output statements. Moreover, since the program operates within the website, it is possible to handle user rights. For example, some users of a corporate account can be allowed to view tables, edit tables, input data and/or generate output statements. Thereby, the basic idea is to offer Microsoft Access-based functions online.

The claimed method according to the underlying invention comprises the following features:
- Creation of a database, tables and table fields: Thereby, several field types can be defined, e.g. fields comprising text, memo, number, date, sound, picture and video formats.
- Definition of a sample input form (database file): An example of a website 600 comprising an input form for a financial analysis and expert system providing an online processing of financial input data according to an embodiment of the underlying invention is depicted in Fig. 6. Herein, a list of all the existing input forms appears on a navigation bar on the left. The user can type in the name of the new input form (here: "Invoices") in a special text field placed at the top of the page. On the right the existing fields can be displayed by means of a pull-down menu, thereby allowing the user to either select all the existing fields or individually select each field. A save button at the bottom of this page allows the user to save the newly created input form. Once the input form is created, all the input forms appear one underneath the other by default, and several buttons, such as
[ First ] [ Previous ] [ Next ]
[ Last ] [ New ] and [ Save ],
are added which allow the user to navigate through the fields.
- Definition of a sample output form (financial report): A list of all the existing output forms appears on a navigation bar on the left half of page 600 as depicted in Fig. 6. The user can type in the name of the new input form in a special text field. He/she can decide whether the output statement shall be displayed as a list (in which each database record appears on a single row) or as labels (in which each field of a database record appears on a single row). In case of labels, the user can choose between several formats (e.g. one or several formats per page). A form displays all the existing fields and enables the user to either add all the existing fields or individually add each field. The name of the table field is used by default as a caption or title, but can possibly be changed by the user. If the user chooses a report as a list, he/she can define the following parameters:

| Parameter | Example |
|---|---|
| Horizontal Alignment | left justified, centered, right justified |
| Vertical Alignment | top, centered, bottom |
| Summed Fields | in case of adding the entries of fields with number formats |
| Priority | in case of defining the order of a key for sorting attributes (primary key, secondary key, tertiary key, etc.) |
| Total Value | in case that a total must be computed for each value of a specific field |
| Customized Output Format | if an output format shall be generated which is different from the one defined as a standard output format |

- Control of the user rights: By default, none except the administrator of the corporate account is permitted to view or edit the structure of the database and the herein stored data. Consequently, the user rights must be set to allow users of a corporate account to be able to either view or edit database files. A list of all users appears on a navigation bar on the left half of page 600. The administrator has to define user rights for each user concerning the following actions: viewing reports, entering new records, editing existing records and deleting records.

The significance of the symbols designated with reference signs in the Figs. 1a to 6 can be taken from the appended table of reference signs.

Table of the depicted features and their corresponding reference signs

| No. | Feature |
|---|---|
| 100a | system architecture of the data network environment 104 in accordance with the preferred embodiment of the underlying invention, which is directed to the online creation and management of enterprises |
| 100b | system architecture of the data network environment 104 in accordance with another embodiment of the underlying invention, which is directed to the online management of financial data |
| 100c | system architecture of the data network environment 104 in accordance with another embodiment of the underlying invention, which is directed to the online creation and management of databases |
| 102 | server within said system architecture 100a, 100b and 100c, respectively, having access to an internal database |
| 104 | data network environment |
| 106 | client within said system architecture 100a, 100b and 100c, respectively |
| 108 | client within said system architecture 100a, 100b and 100c, respectively |
| 110 | distributed resource (external database) within said system architecture 100a, 100b and 100c, respectively, comprising process data for applications running on the server 102 |
| 200 | simplified example of the graphical interface for an application program offered by the server 102 to the clients 106 and 108 |
| 201 | address field of the displayed website |
| 202 | "Start Business" button used for the virtual start of an enterprise |
| 204 | "Create Business" button used for the virtual creation of an enterprise |
| 206 | pull-down menus of the graphical interface 200 used for the selection of different alternatives |
| 208 | selection fields of the graphical interface 200 used for the selection of one or more specific options |
| 210 | selection fields of the graphical interface 200 used for the selection of only one specific choice |
| 212 | input field of the graphical interface 200 used for inputting information (here: text format) |
| 214 | output field of the graphical interface 200 used for displaying retrieved information (here: number format) |
| 216a | "Load" button of the graphical interface 200 used for loading specific information |
| 216b | "Save" button of the graphical interface 200 used for saving specific information |
| 216c | "Delete" button of the graphical interface 200 used for deleting specific information |
| 216d | "Cancel" button of the graphical interface 200 used for canceling an action |
| 216e | "Back" button of the graphical interface 200 used for visiting the previous page of the website |
| 216f | "Forward" button of the graphical interface 200 used for visiting the following page of the website |
| 216g | "Home" button of the graphical interface 200 used for visiting the homepage of the website |
| 216h | "Help" button of the graphical interface 200 used for opening a window which contains help information |
| 300 | window showing a conventional French tax form which can be accessed over the Internet according to the present state |
| | of the art |
| 400 | window showing an input form for the financial analysis and expert system providing an online processing of financial input data according to an embodiment of the underlying invention |
| 500 | window showing a sample report of the financial analysis and expert system providing an online processing of financial input data according to an embodiment of the underlying invention |
| 600 | window showing an example of a website comprising an input form for the financial analysis and expert system providing an online processing of financial input data according to an embodiment of the underlying invention |

## Claims

1. Method for creating and managing enterprises online by means of applications running on a server (102) in a data network environment (104), wherein
- the server (102) can be accessed from clients (106, 108) over the data network (104),
- the applications can be started by means of a graphical interface (200) offered to the clients (106, 108),
- the applications process data entered by the clients (106, 108) or data stored on distributed resources (110), and
- the applications generate data relevant for creating and/or managing an enterprise.

2. Method for creating and managing enterprises according to claim 1,
**characterized in that**
the graphical interface (200) offers pull-down menus which display the path the respective client (106 or 108) has followed on the site tree.

3. Method according to anyone of claims 1 or 2,
**characterized in that** when entering date information, the current month and year are automatically added once the respective client (106, 108) has entered a day and activated a predetermined button on a keyboard.

4. Method according to anyone of the preceding claims,
**characterized in that**
when entering date information, the current year is automatically added once the respective client (106, 108) has entered a day and month and activated by means of a predetermined button on a keyboard.

5. Method according to anyone of the preceding claims,
**characterized in that**
a business plan can be automatically generated by means of a question and answer process.

6. Method according to anyone of the preceding claims,
**characterized in that**
financial planning and asset management applications are provided.

7. Software program code,
implementing a method according to anyone of the preceding claims when run on a computing device in a data network environment.

8. System for creating and managing enterprises online,
wherein
- the system comprises a server (102) with applications in a data network environment (104) which can be accessed from clients (106, 108) over the data network (104),
- the applications can be started by means of a graphical interface (200) offered to the clients (106, 108),
- the applications process data entered by the clients (106, 108) or data stored on distributed resources (110), and
- the applications generate data relevant for creating and/or managing an enterprise.

9. Method for processing financial input data online by means of applications running on a server (102) in a data network environment (104),
wherein
- the server (102) can be accessed from clients (106, 108) over the data network (104),
- the applications can be started by means of a graphical interface (200) offered to the clients (106, 108), and
- the applications process data entered by the clients (106, 108) or data stored on distributed resources (110),
**characterized in that**
an online transfer of data files comprising financial input data to predefined tax forms which can be accessed via the Internet is provided by means of an hyperlink to an HTML-based Internet program serving as a financial analysis tool for processing said financial input data.

10. Method according to claim 9,
**characterized in that**
said financial input data comprise balance sheets, general ledgers, income statements and/or profit-and-loss statements of enterprises or self-employed persons.

11. Method according to anyone of the claims 9 and 10,
**characterized in that**
said financial output data comprise financial reports generated by said financial analysis tool, in which calculated ratios from the financial input data are transformed into human-readable sentences and/or business graphics by means of the financial analysis tool.

12. Method according to anyone of the claims 9 to 11,
**characterized in that**
the user can optionally import balances which can be inserted in balance and income statement forms.

13. Software program code,
implementing a method according to anyone of the claims 9 to 12 when run on a computing device in a data network environment.

14. Financial analysis and expert system for processing financial input data online by means of applications running on a server (102) in a data network environment (104),
wherein
- the server (102) can be accessed from clients (106, 108) over the data network (104),
- the applications can be started by means of a graphical interface (200) offered to the clients (106, 108), and
- the applications process data entered by the clients (106, 108) or data stored on distributed resources (110),
**characterized in that**
a method for an online processing of financial input data is performed using a financial analysis tool according to anyone of the claims 9 to 12.

15. Financial analysis and expert system according to claim 14,
**characterized in that**
the financial analysis and expert system provides input forms which can be filled in online by the user.

16. Financial analysis and expert system according to anyone of the claims 14 and 15,
**characterized in that**
the financial analysis and expert system provides sample reports comprising human-readable sentences and/or business graphics.

17. Financial analysis and expert system according to anyone of the claims 14 to 16,
**characterized in that**
the sample reports can either be created in an HTML format, a RTF format or in a Microsoft Word format.

18. Method for creating and managing databases online by means of applications running on a server (102) in a data network environment (104), wherein
- the server (102) can be accessed from clients (106, 108) over the data network (104),
- the applications can be started by means of a graphical interface (200) offered to the clients (106, 108),
- the applications process data entered by the clients (106, 108) or data stored on distributed resources (110), and
- the applications generate data relevant for creating and/or managing a database.

19. Method for creating and managing databases according to claim 18,
**characterized in that**
the graphical interface (200) offers pull-down menus which display the path the respective client (106 or 108) has followed on the site tree.

20. Method according to anyone of claims 18 or 19,
**characterized in that**
when entering date information, the current month and year are automatically added once the respective client (106, 108) has entered a day and activated a predetermined key on a keyboard.

21. Method according to anyone of the claims 18 to 20,
**characterized in that**
when entering date information, the current year is automatically added once the respective client (106, 108) has entered a day and month and activated by means of a predetermined key on a keyboard.

22. Software program code,
implementing a method according to anyone of the claims 18 to 21 when run on a computing device in a data network environment.

23. System for creating and managing databases online,
wherein
- the system comprises a server (102) with applications in a data network environment (104) which can be accessed from clients (106, 108) over the data network (104),
- the applications can be started by means of a graphical interface (200) offered to the clients (106, 108),
- the applications process data entered by the clients (106, 108) or data stored on distributed resources (110), and
- the applications generate data relevant for creating and/or managing a database.
